# EUROPEAN PATENT APPLICATION

(11) **EP 1 475 941 A1**
(43) Date of publication of application: **10.11.2004**
(21) Application number: 03010420.2
(22) Date of filing: 08.05.2003
(51) Int. Cl.: H04L 29/08, H04M 3/493

(54) **Scalable service provision to a vehicle entertainment and information processing device**

(71) Applicant: Harman/Becker Automotive Systems GmbH, 76303 Karlsbad (DE)
(72) Inventor: Kühn, Thomas, 30167 Hannover (DE); Behrens, Ralph, 31174 Schellerten (DE); Kuz, Volker, 38106 Braunschweig (DE)
(74) Representative: Grünecker, Kinkeldey, Stockmair & Schwanhäusser Anwaltssozietät

(57) **Abstract**

This invention is related to a entertainment and information processing method and system for exchanging data between a device and a content provider as well as to the two entities of the system. Further, this invention is related to a service gateway interfacing the content provider and the device. To provide a scalable interface to the application and/or content providers this invention describes a method for exchanging data between a vehicle entertainment and information processing device and a content provider, comprising the steps of the device requesting data from the content provider, the content provider encoding the requested data in a first data format, the content provider transmitting the encoded data to a service gateway, the service gateway generating at least one downstream service packet in a second data format based on the data received from the content provider, and the service gateway transmitting the at least one downstream service packet to the device.

## Description

### Field of the Invention

This invention is related to a vehicle entertainment and information processing method for exchanging data between a vehicle entertainment and information processing device and a content provider. Further, this invention is related to the vehicle entertainment and information processing device and the content provider, as well as to a system comprising these components.

### Related Art

Geographic location introduces a new dimension to personalized information services. Location sensitive applications provide personalized services that enrich subscribers' interaction with information, drive network usage, and give carriers new revenue opportunities.

Carriers can offer increased value to subscribers and generate new revenues by adding location to existing wireless data services, such as alerting and messaging or directory services. Applications are developed using standards-based technologies such as Java, XML, JSP, and XSL, facilitating integration with existing applications.

In this respect it is often important that the applications are changeable with market conditions, not locking a carrier into one method or a proprietary, ,,spot solution" and that they are maintainable, i.e. based on open standards and supported products, not a custom programmed solution.

The applications are increasingly used by in-vehicle entertainment and/or information processing devices that have stripped the conventional radio broadcast receiver in a vehicle. Today, those devices may not only provide the functionality of receiving radio programs and data services as RDS, but may also include telematics functionality such as navigation and may be capable of providing above-mentioned services and applications to a user.

The manufacturers of those devices often use proprietary standards and data formats when exchanging data between the devices and another entity (e.g. content providers or servers) via a wireless link. As those proprietary standards and data formats are contrary to the application and content providers' demands on open and standardized interfaces, they tend not to be flexible enough for being supported by a large variety of application and/or content providers.

Further, proprietary solutions are rarely concise and usually not well documented nor are they flexible enough for extensions, as any change to data formats and structures will require that all services and applications have to be adopted to the new extensions. All these shortcomings bear potential sources for errors in data communications as well.

### Summary of the Invention

Therefore, there is a need to provide a scalable interface to the application and/or content providers.

This invention is based on the idea that by introducing a service gateway interfacing the content providers and the devices, a concise, scalable and flexible interface to the content providers may be provided. This interface should be easily manageable and well documented such that potential error sources are eliminated.

Further, the packet generation of the data packets delivered to the devices in manufacturer specific standards may be shifted from the content and application providers to the service gateway, which allows flexible development and changes in the proprietary standards and data formats without changing the interface between service gateway and content providers, i.e. without the content and application providers noticing the extensions and changes on the interface between service gateway and device, i.e. the proprietary interface. In other words, changes on the interface between service gateway and device become transparent to the content providers.

To describe data formats of the interface between the service gateway and the content provider in a simple, flexible and extensible representation, this invention may use a markup language for this purpose. Especially, the extensible Markup Language (XML) provides an universal format for data and allows to easily describe and deliver rich, structured data or content in a standard, consistent way.

This invention provides a vehicle entertainment and information processing method for exchanging data between a vehicle entertainment and information processing device and a content provider. In this method the device requests data from the content provider, the content provider encodes the requested data in a first data format, transmits the encoded data to a service gateway, the service gateway generates at least one downstream service packet in a second data format based on the data received from the content provider, and transmits the at least one downstream service packet to the device.

The service gateway may further decode the received data, and encode the data of the at least one downstream service packet in the second data format, wherein the first and the second data format are two different data formats. Hence, the data formats at the interface between the device and the service gateway and the interface between the service gateway and the content provider do not necessarily have to be the same. This may provide an extended flexibility to the system.

As the device receiving the requested content from the content provider may be capable of using the same data format as the content provider, the service gateway may decide whether to convert the received data according to the first data format to data according to the second data format or whether to forward the received data according to the first data format in the same data format to the entertainment and information processing device. Further, the service gateway may convert the received data in the first data format to data according to the second data format before generating the downstream service packet transmitted to the device, if it decides to convert the received data. If it decides not to convert the received data, the service gateway may generate a downstream service packet comprising the received data in the first data format from the content provider, and may forward the downstream service packet comprising the received data in the first data format.

Further, the decision on changing the data format at the service gateway may be based on a data format identifier comprised in the data received from the content provider.

As the content delivered from the content provider to the device may require the device to respond to the content provider, the entertainment and information processing device may generate an upstream service packet according to a third data format and transmit the upstream service packet to the service gateway. The service gateway may generate at least one data packet in the first data format based on the data of the upstream service packet, and may transmit the generated at least one data packet to the content provider.

In the wording of this application the term ,,first data format" indicates standard interface specifications between service gateway and content provider. Indeed it would be possible that the data structures of the first data format in upstream and downstream are different.

Moreover, the service gateway may decide whether to convert data of the upstream service packet according to the third data format to data according to the first data format or whether to forward the data according to the third data format in the same data format to the content provider. The service gateway may convert the data of the upstream service packet of the third data format to data according to the first data format before generating the at least one data packet of the first data format, if it decides to convert the data of the upstream service packet. The upstream service packet may be forwarded to the content provider, if it decides not to convert the data of the upstream service packet.

Further, the data encoding at the content provider may comprise compressing the requested data, and the method may further comprise the step of decompressing the data comprised in the downstream service packet at the device.

As the bandwidth on a wireless link between a service gateway and device may be a scarce resource, it may be of advantage, if data encoding at the content provider further comprises compressing the requested data. The conversion at the service gateway may then comprise decompressing the data received from the content provider. Further, the generation of the downstream service packet at the service gateway may comprise compressing the data to be transmitted, and the device may then decompress the data comprised in the downstream service packet.

Another alternative or additional possibility to compress the transmitted data is that the generation of the downstream service packet at the service gateway comprises compressing the data to be transmitted before generating the downstream service packet, wherein the device decompresses the data comprised in the downstream service packet.

For the compression of the data transmitted among the different entities of the system, various compression methods exist and may be used. Examples for compression methods are ZIP, GZIP, BZIP2, RAR and TAR.

As mentioned above it is of advantage to choose the data formats for data transmission among the different entities in the system such that at least one of the data formats is based on a markup language. The data formats to represent information or content may thereby be in an extensible Markup Language (XML) format, a proprietary Multipurpose Internet Mail Extensions (MIME) format, a Hyper Text Markup Language (HTML) format, a Wireless Markup Language (WML) format or a proprietary data format.

Another possibility that may be additionally or separately used is tokenizing the tags of the markup language uses to describe the data formats for data exchange. Therefore, the method steps of compressing data may comprise tokenizing the tags for data compression.

Further, this invention provides a service gateway adapted to perform the techniwue described above in a content providing system comprising a vehicle entertainment and information processing device, a content provider and the service gateway. The service gateway may thereby comprise a receiver for receiving data from the content provider in a first data format, the data being requested by the entertainment and information processing device. Further, the service gateway may comprise packet generation means for generating at least one downstream service packet from the data received from the content provider, wherein the at least one downstream service packet is in a second data format. Moreover, the service gateway may comprise a transmitter for transmitting the at least one downstream service packet to the device.

The service gateway may further comprise decision means for deciding whether to convert the received data according to the first data format to data according to the second data format or whether to forward the received data according to the first data format in the same data format to the entertainment and information processing device.

The receiver may be adapted to receive an upstream service packet according to a third data format from the entertainment and information processing device. The decision means may be adapted to decide whether to convert data of the upstream service packet according to the third data format to data according to the first data format or whether to forward the data according to the third data format in the same data format to the content provider.

This invention further provides a content provider apparatus adapted to perform the method described above in a system comprising a vehicle entertainment and information processing device, the content provider and the service gateway. The content provider apparatus may comprise encoding means for encoding requested data in a first data format. Moreover, it may comprise packet generation means for forming a downstream data packet comprising the encoded data and a data format identifier for identifying the data format in which the service gateway forwards the encoded downstream data packet to the entertainment and information processing device. The content provider may further comprise a transmitter for transmitting the downstream data packet to the service gateway.

The content provider apparatus may further comprise receiving means for receiving data requesting content to be delivered to the entertainment and information processing device.

Further, this invention provides a vehicle entertainment and information processing device adapted to perform the method described above in a content providing system comprising the vehicle entertainment and information processing device, a content provider and a service gateway is disclosed. The device may comprise a receiver for receiving at least one downstream service packet from the service gateway, packet generation means for generating a upstream service packet according to a third data format, and a transmitter for transmitting the upstream service packet from the entertainment and information processing device to the service gateway and for requesting data from the content provider.

The vehicle entertainment and information processing device may further comprise encoding means for encoding data transmitted from the device and for optionally compressing the data, and decoding means for decoding data received at the device and for decompressing the received data in case they are received in a compressed data format.

Finally, this invention provides a content providing system, comprising a service gateway, a content provider, and a vehicle entertainment and information processing device.

### Brief Description of the Figures

In the following, this invention will be described in more detail referring to the attached figures. Similar or corresponding details in the figures are marked with the same reference numerals.
- **Fig. 1**: shows a vehicle entertainment and information processing system according to this invention.
- **Fig. 2**: shows the exchange of data in different data formats in the entertainment and information processing system of Fig. 1.
- **Fig. 3**: shows the message flow between of the entertainment and information processing system of Fig. 1, and the corresponding operations of the entities.
- **Fig. 4**: shows the entities of the entertainment and information processing system of Fig. 1 in more detail.

### Detailed Description of the Invention

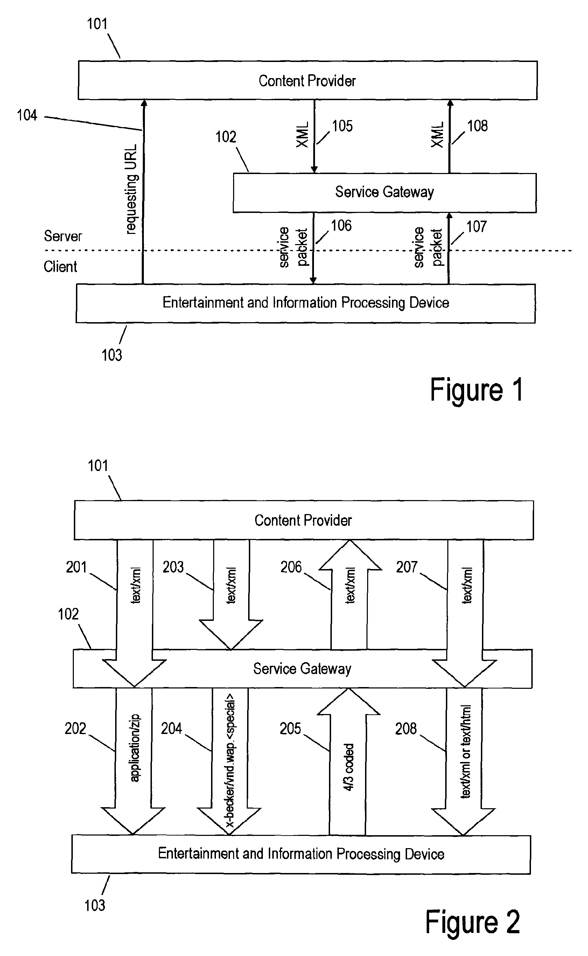

Fig. 1 shows an entertainment and an information processing system (system) according to one implementation of this invention. The system comprises three entities, a content provider 101, a service gateway 102 and an entertainment and information processing device 103 (device). The content provider 101 and the service gateway 102 are located at the server side and are connected to the device 103 on the client side via a link, such as a wireless communication network (for example GSM, UMTS, etc).

The content provider 101 provides services and/or applications to the device 103 via the service gateway 102. Further, the content provider 101 may be connected to one or more databases or other entities within a content delivery network in order to provide its services and applications.

As described above, the content provider 101 is interfaced by the service gateway 102. The service gateway 102 provides a standardized XML interface to the content provider 101 which describes different data formats for services and applications delivered to the device 103. The connection between service gateway 102 and device 103 may thereby be in accordance with a proprietary standard. However, it is also possible to use the same data formats as defined by the XML interface between content provider 101 and service gateway 102 for communications between service gateway 102 and device 103.

The figure further briefly illustrates a possible operation of the system. The device 103 requests an URL 104, i.e. requests a service, an application or simply data from content provider 101. The content provider 101 does not deliver the requested data or service directly to the entertainment and information processing device 103, but delivers its data 105 to the service gateway 102 in a standardized format using downstream data packets. The service gateway 102 in turn generates a downstream service packet from the downstream data and transmits the service packet 106 to the device 103.

Should the requested service or application require the device 103 to transmit data to the content provider 101, i.e. for updating a user profile on a server (i.e. content provider 101 in the figures), the device 103 is capable of forming an upstream service packet and to transmit this packet 107 via of the service gateway 102 to the content provider 101. The service gateway 102 may thereby reformat the content of the upstream service packet into the standardized data format of the content provider-service gateway interface and forward the information 108.

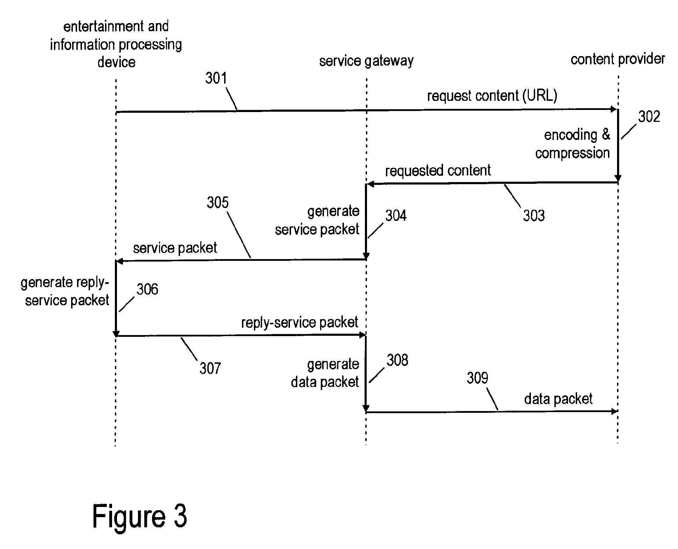

A more detailed description of the data flow and the operation of the different entities within the entertainment and information processing system is provided further down below in reference to Fig. 3.

Fig. 2 illustrates examples for the different data formats that may be used for data transmission in the entertainment and information processing system. The arrows indicate the different data flows between the content provider 101 and the service gateway 102 and the entertainment and information processing device 103, respectively. The shown formats are not intended to restrict this invention to these formats only.

The data flow of arrows 203 and 204 illustrates the data flow between content provider 101 and device 103 according to one aspect of this invention. After requesting a service or application from the content provider 101 (see Fig. 1, reference numeral 104), the content provider 101 provides the requested service data or application in a text/xml format 203 to the service gateway 102. The data format on the content provider-service gateway interface in the XML format as illustrated by the arrow 203 will be described in more detail in the following.

The XML-interface definition between the content provider 101 and the service gateway 103 may use the following format on the downstream (content provider 101 to service gateway 102): 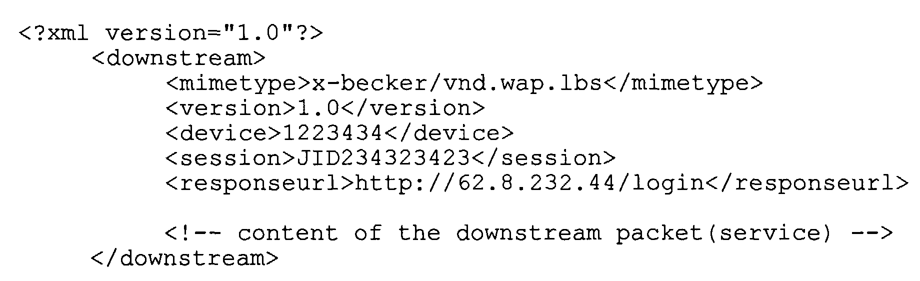 and the following format on the upstream (service gateway 102 to content provider 101):

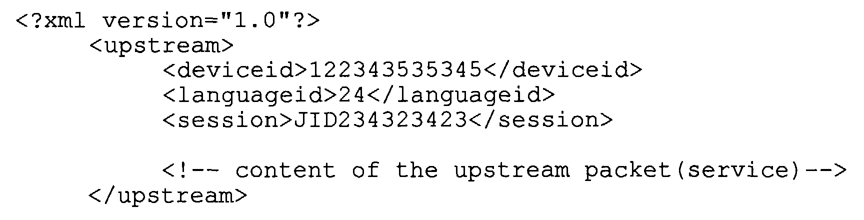

The <downstream> tag and <upstream> tag may be used to identify the packet content as being transmission data from the content provider 101 to the service gateway 102 and from the service gateway 102 to the content provider 101, respectively.

The <mimetype> tag identifies a MIME type defining the data format to be used when transmitting the packet's payload from the service gateway 102 to the device 103. In other words the <mimetype> tag provides an identifier for identifying the data format for providing content or a service to the device 103 via the wireless connection between device gateway 102 and the device 103.

In order to allow the service gateway 102 to forward the content of the packet to the correct service/content requesting device, the content provider 101 may include an identifier of the intended receiving device 103 into the <deviceid> tag in the downstream format. In the upstream data the same tag is used to identify the sending source of the upstream service packet, i.e. the device 103 transmitting the data on the upstream. Hence, the content provider 101 can identify the sending source and may in turn reply to the device 103.

As each device 103 may simultaneously use more than one single service, i.e. run more than one session, that may be provided by a single or a plurality of content providers 101 the downstream and upstream data formats include a <session> tag to identify the session (i.e. service or content request) to which the transmitted data belong.

Further, since the content provider 101 does not reply to the device directly, but sends its data to the device 103 through the service gateway 102, the downstream information comprise a <responseurl> tag to allow the receiving device 103 to associate the received data packets to a service or data request (see Fig. 1, reference numeral 104, or Fig. 3, reference numeral 301).

Finally, the upstream format of the XML interface may further define a <languageid> tag that identifies the language used at the entertainment and information processing device 103.

In the above examples of the upstream and downstream data format, the comments < ! -- ... --> indicate the sections in the XML definitions in which the actual payload is transmitted using service and content dependent XML tags.

The following example shows a complete downstream data packet in which destinations for a navigation system are downloaded from a content provider 101, in this example a server providing off-board navigation services:

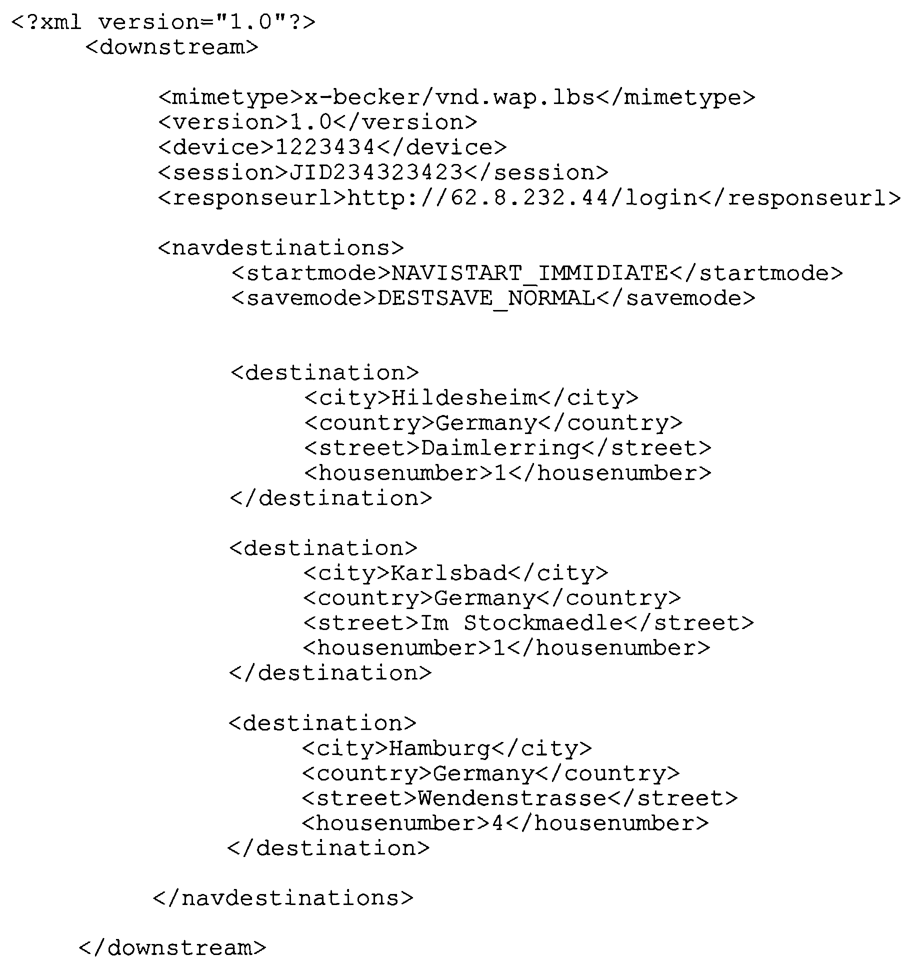

In the above example, the <navdestinations> tag indicates to a means processing the packet payload (e.g. a navigation system), that in the following navigation destinations are provided. The <startmode> tag allows to instruct the navigation system to start navigation to one of the destinations provided in the payload immediately or to inform the navigation system connected or integrated in device 103 to start navigation later, e.g. upon user selection. Further, the <savemode> tag is used to notify the device 103 whether the navigation system should save the provided information on the destinations locally or not, or if existing similar, locally stored information should be overwritten or not.

The following <destination> tags provide the necessary information on the destinations that may be navigated to using a navigation system. The information itself within the <destination> tags are self-explanatory and therefore their detailed description is omitted.

The examples given above illustrate the basic structure of the standardized XML interface provided between service gateway 102 and content provider 101. As the XML design is flexible and allows to define new data formats by including new tag definitions in the DTD file/s that describe/s the meaning of the different tags, a scalable and flexible interface may be provided. Another benefit from using markup languages for the description of data formats is that the parsers analyzing the data structures according to the data format descriptions (DTD files) usually simply ignore tags they can not interpret correctly and do not generate error messages in the latter case. Hence, the interface designed is very robust against changes and extensions.

As bandwidth may be a scarce resource on a wireless link, the content provider 101 or the service gateway 102 may compress the transmitted data in a markup language format by using tag-compression, so called tokenizing. When tokenizing the tags, each of the tags is replaced by a number. To map each of the numbers to a tag according to the interface definitions, a static list may exist or a dynamic mapping-list may be generated and transmitted along with the tokenized payload. The following is an example of a tokenized version of the example given above illustrating the provision of destination information:

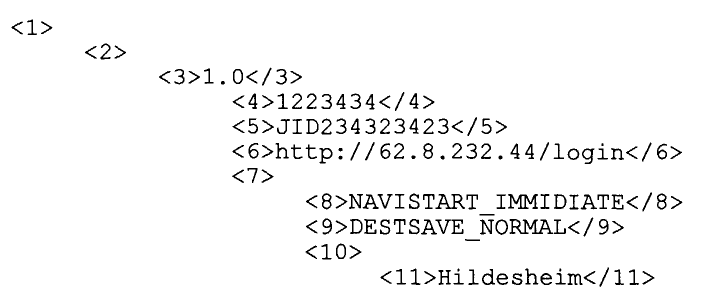

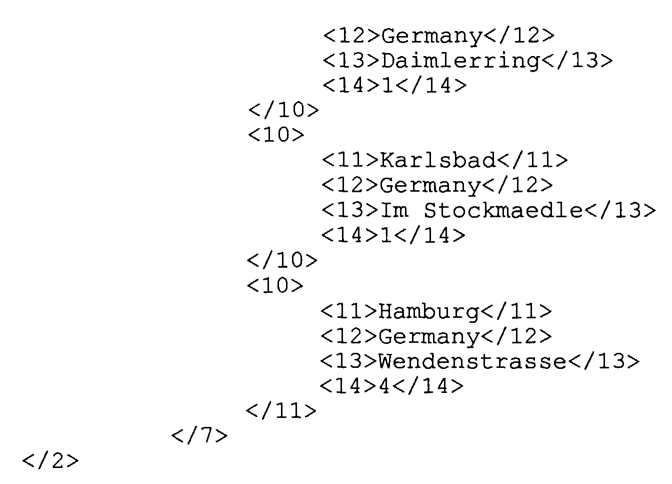

Tokenizing of tags is very efficient when used to compress larger amounts of information. The compression may reduce the data size by approximately 30% up to 50%. Further, the tokenized payload may be compressed using standard compression algorithms like ZIP, BZIP2, TAR, etc. Of course the payload in XML format can be also compressed "directly", without tokenizing, using one of these algorithms.

A comparable data compression mechanism may be further employed for transmitting data in the upstream and for data transmission between service gateway 102 and device 103.

Referring to Fig. 2 again, the service gateway 102 receives the downstream data from the content provider 101 in the text/xml format (see reference numeral 203) and either transmits the data in a downstream service packet using a proprietary MIME type 204 indicated in the downstream data packet sent by the content provider 101 (see <mimetype> tag of the XML interface specification), or may simply forward the downstream data in the text/xml format 208 to the device 103, if the device 103 is capable of processing this type of information. Another possibility would be that the service gateway 102 reduces the size of the downstream data by compression 202 to save resources on the wireless link.

Each device 103 of the system may indicate to the service gateway 102 in extra data packets or using a data field of a proprietary data format of the service gateway-device interface, which data formats may be processed by the device 103. This signaling allows a large variety of devices 103 employing or supporting different versions of data format standards to participate in the entertainment and information system.

As described above, the service gateway 102 providing a standardized interface to the content providers 101 will render the problem of different (proprietary) data formats on the wireless link between service gateway 102 and device 101 transparent to the content provider 101. Hence, the service gateway 102 may further act as a controlling instance which always forwards data to the devices 103 in a format that can be processed by same.

The upstream data flow is shown by arrows 205 and 206. It is to be noted that the data format of the upstream data at the interface between service gateway 102 and the content provider 101 may correspond to the downstream data format in order to provide standard formats on this interface.

Fig. 3 illustrates the data flow and operation of the entertainment and information processing system of Fig. 1. In step 301, the entertainment and information processing device 103 requests a service from the content provider 101. The content provider 101 receives the request and may encode the requested downstream data corresponding to the service or application in a standard data format, e.g. the XML format defined for the content provider-service gateway interface. It is further possible that the requested data is compressed, in order to enhance bandwidth efficiency on the wireless link between the service gateway 102 and the device 103. After forming a downstream data packet at the content provider 101, the downstream data is transmitted from the content provider 101 to the service gateway 102 in step 303. The service gateway 102 receives the requested content from the content provider 101 and generates a downstream service packet 304 that is transmitted to the device 103 in step 305 via the wireless link.

The processing of the downstream data at the service gateway 102 may comprise different steps. For example, the service gateway 102 may analyze the data format of the received downstream data and decide whether it is necessary to convert the data format to another data format, e.g. a proprietary data format used on the service gateway-device interface prior to transmission. Depending on the decision, the service gateway 102 converts the data before generating the downstream service packet 304 delivered to the device 103 in step 305.

If the entertainment and information processing device 103 is capable of processing the downstream data (see step 303) from the content provider 101, the service gateway 102 may decide in step 304 to simply forward the downstream data in the same data format to the entertainment and information processing device 103.

Further, the service gateway 102 may consider to compress the requested content for the transmission via the wireless link in step 304, if the downstream data has not been delivered in a compressed format. Alternatively, if the downstream data has been delivered in a compressed format, but the data format of the downstream data has to be converted for generating the downstream service packet delivered to the device 103 in step 305, the service gateway 102 may decompress the downstream data first, convert the data format of the downstream data to another data format, and generate a downstream service packet 304 which is transmitted to the device 103 in step 305. Prior to the generation of the downstream service packet after conversion, the service gateway 102 may compress the data delivered to the device 103 again

The entertainment and information processing device 103 receives the downstream service packet transmitted in step 305 and analyses its content. If the content of the downstream service packet is in a compressed format, device 103 will decompress the data first. Then the data is analyzed and provided to the service requesting entity within the device 103, for example the navigation system, laptop or PDA attached to the device 103, or the like.

In case the requested service requires that the entertainment and information processing device 103 requires a response to the content provider 101, the device 103 generates an upstream service packet 306 and transmits the upstream service packet in step 307 to the service gateway 102. The received data in the upstream service packet may be processed in a similar manner as the requested content delivered to the service gateway 102 in step 303.

According to this invention, the service gateway 102 may generate a upstream data packet in step 308 and transmit the data packet to the content provider 101 in step 309.

The generation of the data pack in step 308 may comprise the compression of the content of the upstream service packet prior to the packet generation, a conversion of the data of the upstream service packet into another data format or the combination thereof.

Further, it is also possible that the generation of the upstream service packet at the device 103 in step 306 may comprise a compression step for compressing the upstream data prior to packet generation In the latter case, the data packet generation step 308 may further comprise a decompression step in which the data of the upstream service packet is decompressed prior to data processing as outlined above.

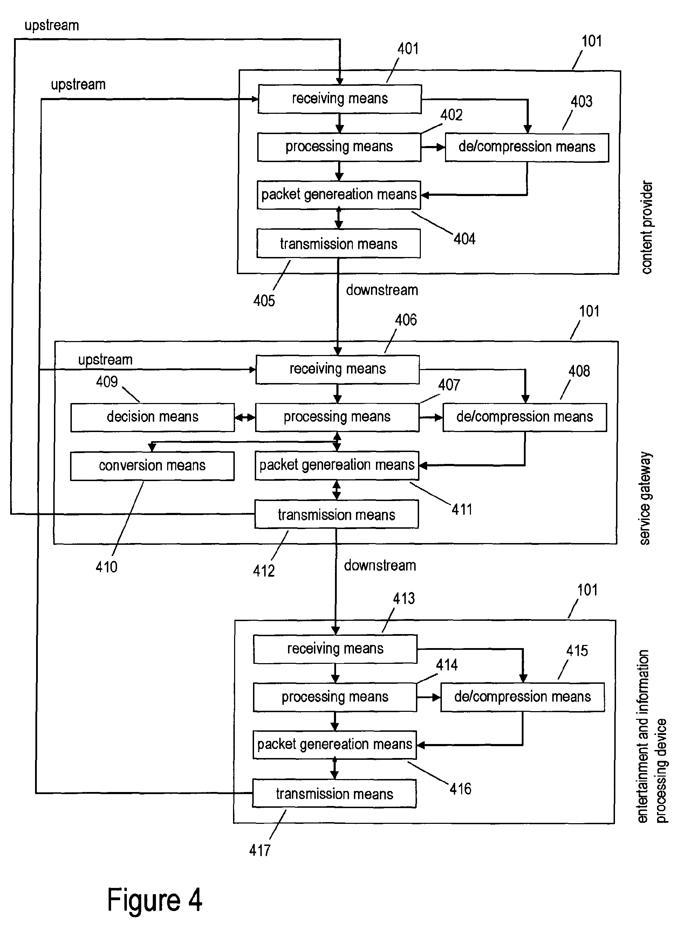

Fig. 4 shows the various means of the entities of the entertainment and information processing system in more detail. All entities of the system, i.e. the content provider 101, the service gateway 102 and the device 103 comprise receiving means 401, 406, 413, processing means 402, 407, 414, de/compression means 403, 408, 415, packet generation means 404, 411, 416, and transmission means 405, 412, 417.

The receiving means 401, 406, 413, and transmission means 405, 412, 417, receive data from and transmit data to the other entities of the system, respectively, as illustrated by the arrows interconnecting the means in the figure.

The de/compression means 403, 408, 415 are used for data compression and data decompression. E.g. the de/compression means 408 in the service gateway 102 may be used for data decompression in case compressed downstream data has been received by the receiving means 406 from the transmission means 405 of the content provider 101. In case the downstream data should be compressed prior to their transmission to the device 103, the de/compression means 408 may be used to compress the downstream data, which will then be transmitted to the device 101 by transmission means 412 using one or more downstream packets formed in packet generation means 411. Similar de/compression of data may be performed at the content provider 101 and the device 103. The de/compression means 403, 408, 414 may be further capable of tokenizing the upstream and/or downstream data for a (further) size reduction of the transmission data.

The processing means 402, 407, 414 may be responsible for processing the data received by the respective receiving means 401, 406, 413, i.e. they control and initiate data compression and/or decompression, analyze the data format of received data packets, instruct the packet generation means 404, 411, 416 to form downstream or upstream data packets to be transmitted, etc. A further task of the processing means 402, 407, 414 may be the encoding of downstream and upstream data according to the various data formats that may be used. At the service gateway 102 the processing means 407 may use or be supplemented by conversion means 410 for this purpose.

At the content provider 101, the processing means 402 may be further employed to load or provide requested services, to fetch data from data bases to provide the services, add a MIME type identifier to the downstream data, etc.

The processing means 407 of service gateway 102 may further read the MIME type identifier and instruct the packet generation means 411 to form downstream service packets according to the indicated MIME type format.

At the device 103, the processing means 416 may further provide the received downstream data to other entities within the device 103, e.g. a navigation system, store the received data on media connected or included in the device 103, fetch data from other entities within the device 103 to process and transmit same to the content provider 101, etc.

As described in reference to Fig. 3 the service gateway 102 may have to decide in which format the downstream data are transmitted over the wireless link to the device 103 (see step 304 in Fig. 3). Therefore, the service gateway 102 may comprise decision means 409 to decide whether to convert the received upstream or downstream data to another data format before transmitting same to the intended receiver, i.e. the content provider 101 or the device 103. In case the decision means 409 decides to convert the data, the processing means 407 will instruct the conversion means 410 to convert the respective data.

## Claims

1. A vehicle entertainment and information processing method for exchanging data between a vehicle entertainment and information processing device and a content provider, the method comprising the steps of:
the device requesting data from the content provider,
the content provider encoding the requested data in a first data format,
the content provider transmitting the encoded data to a service gateway,
the service gateway generating at least one downstream service packet in a second data format based on the data received from the content provider, and
the service gateway transmitting the at least one downstream service packet to the device.

2. The method according to claim 1, wherein the method further comprises the steps of:
the service gateway decoding the received data,
the service gateway encoding data of the at least one downstream service packet in the second data format, and
wherein the first and the second data formats are two different data formats.

3. The method according to claim 1, further comprising the steps of:
the service gateway deciding whether to convert the received data according to the first data format to data according to the second data format or whether to forward the received data according to the first data format in the same data format to the entertainment and information processing device,
the service gateway converting the received data in the first data format to data according to the second data format before generating the downstream service packet transmitted to the device, if it is decided to convert the received data, and
if it is decided not to convert the received data,
the service gateway generating a downstream service packet comprising the received data in the first data format from the content provider, and
forwarding the downstream service packet comprising the received data in the first data format.

4. The method according to claim 3, wherein the decision on changing the data format at the service gateway is based on a data format identifier comprised in the data received from the content provider.

5. The method according to one of claims 1 to 4, further comprising the steps of.
the entertainment and information processing device generating a upstream service packet according to a third data format,
the entertainment and information processing device transmitting the upstream service packet to the service gateway,
the service gateway generating at least one data packet in the first data format based on the data of the upstream service packet, and
the service gateway transmitting the generated at least one data packet to the content provider.

6. The method according to claim 5, further comprising the steps of:
the service gateway deciding whether to convert data of the upstream service packet according to the third data format to data according to the first data format or whether to forward the data according to the third data format in the same data format to the content provider,
the service gateway converting the data of the upstream service packet of the third data format to data according to the first data format before generating the at least one data packet of the first data format, if it is decided to convert the data of the upstream service packet, and
the service gateway forwarding the upstream service packet to the content provider, if it is decided not to convert the data of the upstream service packet.

7. The method according to one of claims 1 to 6, wherein:
the step of encoding at the content provider comprises compressing the requested data, and
the method further comprises the step of decompressing the data comprised in the downstream service packet at the device.

8. The method according to one of claims 3 to 6, wherein:
the step of encoding at the content provider comprises compressing the requested data,
the step of and converting at the service gateway comprises decompressing the data received from the content provider,
the step of generating the downstream service packet at the service gateway comprises compressing the data to be transmitted before generating the downstream service packet, and
the method further comprises the step of decompressing the data comprised in the downstream service packet at the device.

9. The method according to one of claims 1 to 6, wherein:
the step of generating the downstream service packet at the service gateway comprises compressing the data to be transmitted before generating the downstream service packet, and
the method further comprises the step of decompressing the data comprised in the downstream service packet at the device.

10. The method according to one of claims 7 to 9, wherein at least one of the data formats is based on a markup language.

11. The method according to claim 10, wherein
the data according to one of the data formats comprise tags defined by the markup language, and
the steps of compressing data comprises tokenising the tags for data compression.

12. A service gateway adapted to perform the method according to one of claims 1 to 11 in a content providing system comprising a vehicle entertainment and information processing device, a content provider and the service gateway, the service gateway comprising:
a receiver unit for receiving data from the content provider in a first data format, the data being requested by the entertainment and information processing device,
packet generation means for generating at least one downstream service packet from the data received from the content provider, wherein the at least one downstream service packet is in a second data format, and
a transmitter unit for transmitting the at least one downstream service packet to the device.

13. The service gateway according to claim 12, further comprising decision means for deciding whether to convert the received data according to the first data format to data according to the second data format or whether to forward the received data according to the first data format in the same data format to the entertainment and information processing device.

14. The service gateway according to claim 13, wherein:
the receiver unit is adapted to receive an upstream service packet according to a third data format from the entertainment and information processing device, and
the decision means is adapted to decide whether to convert data of the upstream service packet according to the third data format to data according to the first data format or whether to forward the data according to the third data format in the same data format to the content provider.

15. A content provider apparatus adapted to perform the method according to one of claims 1 to 11 in a system comprising a vehicle entertainment and information processing device, the content provider and the service gateway, the content provider apparatus comprising:
encoding means for encoding requested data in a first data format,
packet generation means for forming a downstream data packet comprising the encoded data and a data format identifier for identifying the data format in which the service gateway forwards the downstream data packet to the entertainment and information processing device, and
a transmitter unit for transmitting the downstream data packet to the service gateway.

16. The content provider apparatus according to claim 15, further comprising a receiver unit for receiving data requesting content to be delivered to the entertainment and information processing device.

17. A vehicle entertainment and information processing device adapted to perform the method according to one of claims 1 to 11 in a content providing system comprising the vehicle entertainment and information processing device, a content provider and a service gateway, the device comprising:
a receiver unit for receiving at least one downstream service packet from the service gateway,
packet generation means for generating a upstream service packet according to a third data format, and
a transmitter unit for transmitting the upstream service packet from the entertainment and information processing device to the service gateway and for requesting data from the content provider.

18. The vehicle entertainment and information processing device according to claim 17, further comprising:
encoding means for encoding data transmitted from the device, and
decoding means for decoding data received at the device.

19. The vehicle entertainment and information processing device according to claim 18, wherein:
the encoding means are adapted to compress the data transmitted from the device, and
the decoding means are adapted to decompress the received data in case they are received in a compressed data format.

20. A content providing system, comprising:
a service gateway according to one of claims 12 to 14,
a content provider according to claim 15 or 16, and
a vehicle entertainment and information processing device according to one of claims 17 to 19
